# EUROPÄISCHE PATENTSCHRIFT

(11) **EP 1 717 455 B1**
(45) Veröffentlichungstag und Bekanntmachung des Hinweises auf die Patenterteilung: **23.07.2008**
(21) Anmeldenummer: 05405323.6
(22) Anmeldetag: 29.04.2005
(51) Int. Cl.: F16B 12/00

(54) **Vorrichtung zum Vorspannen eines Möbelbauteils mit mehreren Seilen**
Device for prestressing a furniture element using several cables
Dispositif pour précontraindre un élément de meuble avec plusieurs cables

(43) Veröffentlichungstag der Anmeldung: 02.11.2006
(73) Patentinhaber: Meyer, Rudolf, 6373 Ennetbürgen (CH)
(72) Erfinder: Meyer, Rudolf, 6373 Ennetbürgen (CH)
(74) Vertreter: Nückel, Thomas

(56) Entgegenhaltungen:
- DE-A1- 4 226 153
- DE-U1- 20 217 336
- FR-A- 2 614 968
- FR-A- 2 774 138
- US-A- 1 549 402
- US-A- 3 498 654

## Beschreibung

### Technisches Gebiet

Die Erfindung betrifft eine Vorrichtung zum Vorspannen eines Möbelbauteils mit mehreren Seilen. Die Vorrichtung lässt sich insbesondere im Möbelbau zum Vorspannen von großen Holz- und Glasplatten, Fachböden und Anrichten verwenden.

### Stand der Technik

Bei großen Tischen neigen die Tischplatten dazu, sich in der Tischmitte aufgrund ihres Eigengewichts nach unten zu wölben. Dies ist insbesondere dann der Fall, wenn die Tischplatten lang und die Beine des Tisches in den Ecken der Tischplatte angeordnet sind. Um dem entgegenzuwirken und die Tischplatte wieder plan auszurichten, kann die Tischplatte mit Hilfe zweier auf der Unterseite der Tischplatte angeordneter, gespannter Seile vorgespannt werden. Dazu werden die Seile unter der Tischplatte diagonal spannt. Im Kreuzungspunkt der Seile drücken diese über einen Bolzen die Tischplatte nach oben. Jedes Seil wird mit jeweils einem Seilspanner gespannt, der am Ende des Seils angeordnet ist. Dies hat jedoch den Nachteil, dass der Spannmechanismus unsymmetrisch und deutlich sichtbar ist, was insbesondere bei Glasplatten störend wirkt. Zudem kann das Problem auftreten, dass der Spannmechanismus beim Sitzen die Beinfreiheit einschränkt.

Patentdokument US 1 549 402 A offenbart auch eine gattungsgemäße Vorrichtung zum Spannen eines Möbelbauteils.

### Darstellung der Erfindung

Eine Aufgabe der Erfindung ist es, eine Vorrichtung zum Vorspannen eines Möbelbauteils mit mehreren Seilen anzugeben, bei der der Mechanismus zum Spannen verdeckt wird. Vorteilhafterweise ist die Vorrichtung platzsparend, technisch einfach herstellbar, robust und auch unter hoher Belastung stabil.

Die erfindungsgemässe Lösung hat den Vorteil, dass die Länge des Seils erst dann festgelegt werden muss, wenn der Tisch montiert wird.

Die Aufgabe wird durch eine Vorrichtung gemäß Patentanspruch 1 gelöst.

Die erfindungsgemäße Vorrichtung zum Vorspannen eines Möbelbauteils mit mehreren Seilen weist an den ersten Enden der Seile angeordnete Befestigungsmittel auf, mit denen die Seile mit dem Möbelbauteil verbindbar sind. Zudem sind eine Hülse, in die die zweiten Enden der Seile einführbar sind, und ein in der Hülse angeordnetes Spannmittel vorgesehen, mit dem die zweiten Enden der Seile verbindbar und mittels dem die Seile spannbar sind.

Vorteilhafte Weiterbildungen der Erfindung ergeben sich aus denen in den abhängigen Patentansprüchen angegebenen Merkmalen.

Bei einer Ausführungsform der erfindungsgemäßen Vorrichtung weist die Hülse einen trichterförmigen Seileinlass auf. Dadurch lässt sich das Seil einfach in die Hülse einführen.

Bei einer weiteren Ausführungsform der erfindungsgemäßen Vorrichtung ist der trichterförmige Seileinlass abgerundet. Dadurch lässt sich vermeiden, dass das Seil geknickt und damit unter Umständen beschädigt wird.

Bei einer zusätzlichen Ausführungsform der erfindungsgemäßen Vorrichtung ist der trichterförmige Seileinlass in die Hülse eingepresst. Dadurch wird erreicht, dass der Seileinlass zusammen mit dem rohrförmigen Bereich der Hülse nurmehr ein einziges Bauteil bildet, was die Montage der Spannvorrichtung vereinfacht.

Zudem ist es von Vorteil, wenn bei der erfindungsgemäßen Vorrichtung zum Vorspannen eines Möbelbauteils das Spannmittel für jedes Seil jeweils eine Spannschraube aufweist, mittels der das jeweilige Seil spannbar ist. Dadurch lässt sich die Seilspannung in jedem Seil individuell einstellen.

Darüber hinaus kann bei der erfindungsgemäßen Vorrichtung zum Vorspannen eines Möbelbauteils das Spannmittel für jedes Seil eine Bohrung aufweisen, in der jeweils eine Führungshülse zum Führen des jeweiligen Seils beweglich gelagert ist. Auf diese Art und Weise lässt sich sicherstellen, dass das Seil beim Spannen nicht ausknickt.

Bei einer Weiterbildung der erfindungsgemäßen Vorrichtung weist die Führungshülse als Anschlag einen Ring auf, auf den die Spannschraube wirkt.

Die Vorrichtung zum Vorspannen des Möbelbauteils kann nach einem weiteren Merkmal der Erfindung so ausgebildet sein, dass sich die Hülse am Möbelbauteil abstützt.

Zudem kann bei der erfindungsgemäßen Vorrichtung eine auf dem Möbelbauteil befestigbare Positionierscheibe vorgesehen sein, um die Hülse gegenüber dem Möbelbauteil zu positionieren.

Nach einem weiteren Merkmal der Erfindung kann diese noch weiter verbessert werden, indem die Befestigungsmittel als Seilkauschen ausgebildet sind. Dadurch lassen sich die Seilenden auf einfache Art und Weise mit dem Möbelteil, beispielsweise der Tischplatte oder den Tischbeinen, verbinden.

Des Weiteren ist es möglich, statt der Seile bei der erfindungsgemäßen Vorrichtung Drähte, Kabel, Bänder oder Riemen zu verwenden.

Schließlich kann die erfindungsgemäße Vorrichtung zum Vorspannen eines Möbelbauteils verwendet werden. Das Möbelbauteil kann beispielsweise eine Tischplatte, eine Glasplatte, eine Anrichte oder ein Fachboden sein.

Kurze Beschreibung der Zeichnungen

Im Folgenden wird die Erfindung mit mehreren Ausführungsbeispielen anhand von sechs Figuren weiter erläutert.
- Figur 1a: zeigt eine mögliche Ausführungsform der erfindungsgemäßen Vorrichtung zum Vorspannen eines Möbelbauteils mit mehreren Seilen in einer dreidimensionalen Ansicht.
- Figur 1b: zeigt eine erste Möglichkeit zur Befestigung des Spannseils.
- Figur 1c: zeigt eine zweite Möglichkeit zur Befestigung des Spannseils.
- Figur 1d: zeigt eine dritte Möglichkeit zur Befestigung des Spannseils.
- Figur 1e: zeigt eine vierte Möglichkeit zur Befestigung des Spannseils.
- Figur 1f: zeigt eine fünfte Möglichkeit zur Befestigung des Spannseils.
- Figur 2: zeigt die Vorrichtung zum Spannen des Möbelbauteils im montierten Zustand in einer dreidimensionalen Ansicht.
- Figur 3: zeigt die Spannvorrichtung im montierten Zustand im Querschnitt.
- Figur 4: zeigt die Spannvorrichtung in der Draufsicht.
- Figur 5: zeigt eine weitere Ausführungsform der erfindungsgemäßen Spannvorrichtung im Querschnitt.
- Figur 6: zeigt die weitere Ausführungsform der erfindungsgemäßen Spannvorrichtung in der Draufsicht.

### Wege zur Ausführung der Erfindung

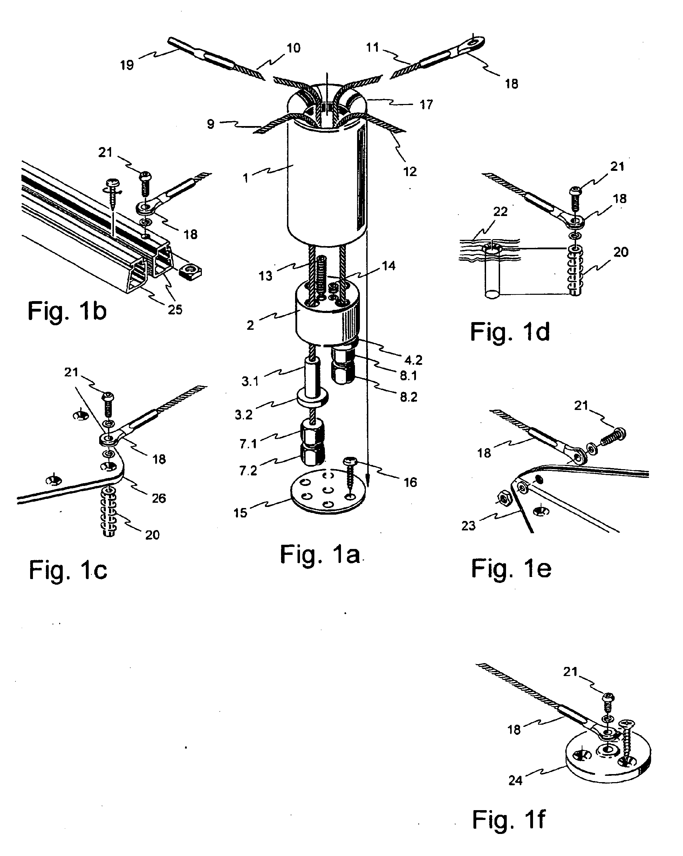

In Figur 1a ist die erfindungsgemäße Vorrichtung zum Vorspannen eines Möbelbauteils mit mehreren Seilen in einer dreidimensionalen Ansicht gezeigt. Die Spannvorrichtung weist eine Hülse 1 auf, auf einer Seite mit einem eine Seileinlassöffnung aufweisenden Deckel 17 versehen ist. Die Hülse 1 kann beispielsweise aus Metall bestehen. Der die Seileinlassöffnung aufweisende Deckel 17 kann ebenfalls aus Metall bestehen und die seilführende Fläche des Deckels 17 derart gekrümmt sein, dass die Seile 9, 10, 11 und 12 schonend in das Innere der Hülse 1 geführt werden können. In Figur 1a sind der Übersichtlichkeit halber lediglich die Seilenden der Seile 9 und 12 durch einen Spannblock 2 hindurchgeführt dargestellt. Grundsätzlich werden jedoch alle Seile, die in die Hülse 1 eingeführt werden, durch den Spannblock 2 hindurchgeführt und mit dessen Hilfe gespannt. In Figur 1a ist über das Seil 9 eine erste Führungshülse 3.1 gestülpt, die mit einer als Anschlag dienenden Lagerscheibe 3.2 versehen ist. Am Ende des Seils 9 befindet sich zudem ein Anschlag 7.1, der zusammen mit einem Verschraubteil 7.2 und einem Seilkeil 7.3, der in Figur 1a jedoch nicht gezeigt ist, bewirkt, dass das Ende des Seils 9 einen festen und belastbaren Anschlag erhält. Über eine erste Spannschraube 13, die in den Spannblock 2 eindrehbar ist und auf die Lagerscheibe 3.2 drückt, lässt sich das Seil 9 spannen. Die Seile 10, 11 und 12 weisen hierzu die gleichen baulichen Maßnahmen auf. Das Seil 12 beispielsweise wird mit einer weiteren Führungshülse 4.1, 4.2 im Spannblock 2 geführt und weist am Ende einen Anschlag 8.1 mit einem Verschraubteil 8.2 auf. Das Spannen des Seils 12 erfolgt über eine weitere Spannschraube. Mit Hilfe der in Figur 1a gezeigten Spannschraube 14 wird das Seil 11 gespannt. Damit sich die Hülse 1 auf dem zu spannenden Möbelbauteil einfach positionieren lässt, kann eine Zentrierscheibe 15 vorgesehen sein, die über eine oder mehrere Schrauben 16 mit dem zu spannenden Möbelteil verschraubbar ist. Alternativ dazu kann die Zentrierscheibe 15 auch mit dem Möbelbauteil verklebt werden. Die zweiten Enden der Seile 9 bis 12 können mit einem bereits werkseitig angebrachten Befestigungsmittel 18 oder 19 ausgestattet sein. So ist beispielsweise das zweite Ende des Seils 10 mit dem Befestigungsmittel 19 ausgestattet, welches auf das zweite Ende des Seils 10 aufgepresst ist und ein Gewinde aufweist, um das zweite Ende des Seils in eine dafür vorgesehene Mutter einzuschrauben. Alternativ dazu kann, wie in Figur 1a gezeigt, das zweite Ende des Seils auch mit einer Seilkausche 18 versehen sein, welche mit dem zweiten Ende des Seils verpresst ist.

In den Figuren 1b bis 1f sind alternative Befestigungsformen für die zweiten Enden der Seile 9 bis 12 gezeigt.

So ist in Figur 1b die Seilkausche 18 mit einer aus zwei Elementen bestehenden metallenen Gratleiste 25 über die Schraube 21 und die entsprechende Mutter verschraubbar. Eine nähere Beschreibung der Funktionsweise und des Aufbaus der Gratleiste 25 ist aus der europäischen Patentanmeldung EP 04405347 entnehmbar.

In Figur 1c ist eine zweite Ausführungsform für die Befestigung der Seilkausche 18 in dreidimensionaler Ansicht gezeigt. Die Platte 26 ist eine Montageplatte für ein Tischbein. Sie enthält eine Bohrung, durch welche die Seilkausche 18 über die Schraube 21 mit einer Einschraubmuffe 20 verschraubbar ist. Die Einschraubmuffe 20 wiederum ist in das zu spannende Möbelteil eingeschraubt.

In Figur 1d ist eine dritte Ausführungsform zur Befestigung der Seilkausche 18 gezeigt. Dabei ist die Seilkausche 18 über die Schraube 21 mit einer Einschraubmuffe 20 verschraubt, welche wiederum in die Tischplatte oder ein geeignetes hölzernes Bauteil 22 eingeschraubt ist. Das hölzernes Bauteil 22 das zu spannende Bauteil selbst sein. Als Befestigungspunkte kommen vorzugsweise die Ecken des Bauteils in Frage, so dass die Seile im montierten Zustand diagonal auf der Unterseite des zu spannenden Bauteils verlaufen.

In Figur 1e ist eine vierte Ausführungsform zur Befestigung der Seilkausche 18 gezeigt. Die Seilkausche 18 wird dabei über die Schraube 21 und eine entsprechende Mutter mit einem Blechwinkel 23 verschraubt, welcher zusätzlich zur Befestigung eines Tischbeins an der Tischplatte dient.

In Figur 1f ist eine fünfte Ausführungsform zur Befestigung der Seilkausche 18 gezeigt. Die Seilkausche 18 wird dazu über die Schraube 21 mit einer Montageplatte 24 verbunden, welche wiederum über eine oder mehrere Schrauben mit der Tischplatte verschraubt ist.

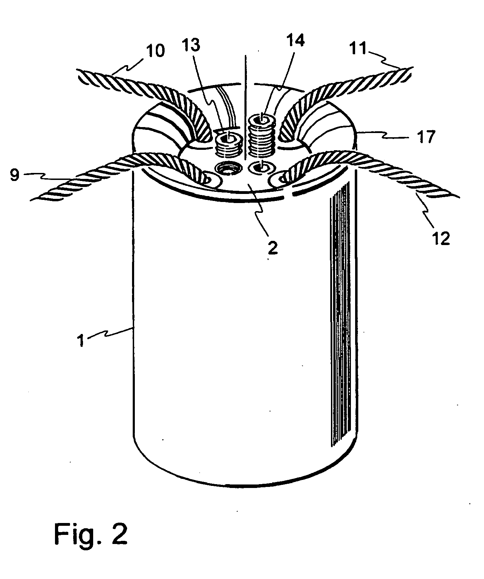

In Figur 2 ist die erfindungsgemäße Vorrichtung zum Vorspannen eines Möbelbauteils mit mehreren Seilen im montierten Zustand in dreidimensionaler Ansicht gezeigt. Wenn die Seile 9 bis 12 unter Spannung stehen, wird die Hülse 1 auf das entsprechende Möbelteil gedrückt und führt dadurch dazu, dass das Möbelteil sich nicht mehr nach unten durchbiegt.

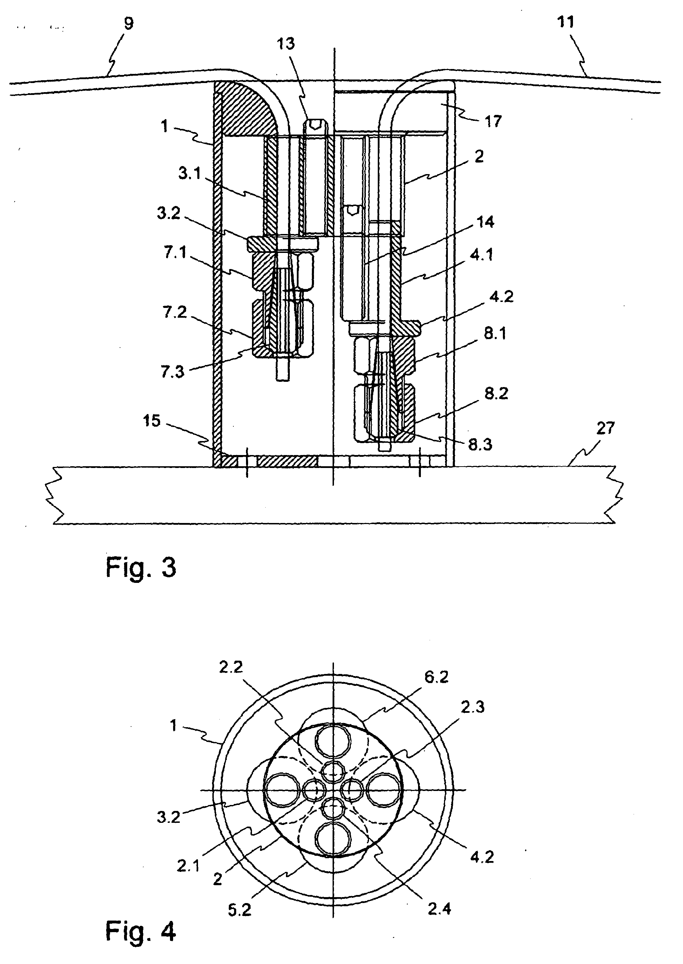

In Figur 3 ist die erfindungsgemäße Vorrichtung zum Vorspannen eines Möbelbauteils mit mehreren Seilen im Querschnitt dargestellt. Die Hülse 1 drückt mit einer Kraft, die von der Seilspannung abhängt, auf ein Möbelbauteil 27, welches beispielsweise eine Tischplatte, eine Glasplatte, der Boden einer Anrichte oder ein Fachboden sein kann.

Die Montage der Vorrichtung zum Vorspannen des Möbelbauteils erfolgt wie folgt.

In einem ersten Arbeitsschritt werden die erforderlichen Seillängen der Spannseile 9 bis 12 ermittelt und die Spannseile 9 bis 12 auf die ermittelte Länge gebracht. In einem zweiten Arbeitsschritt wird die Zentrierscheibe 15 auf dem Möbelbauteil 27 dort befestigt, wo später die Vorspannkraft in das Möbelbauteil 27 eingeleitet werden soll. Nun wird die Hülse 1 mit dem trichterförmigen Deckel 17 mit Hilfe der Zentrierscheibe 15 in Stellung gebracht. In einem weiteren Arbeitsschritt werden die ersten Enden der Seile 9 bis 12 durch den trichterförmigen Deckel 17 in die Hülse 1 und durch die entsprechenden Bohrungen im Spannblock 2 geführt. Dann wird über das Seil 9 die Führungshülse 3.1 geschoben. Im nächsten Schritt wird der Anschlag 7.1 über das Ende des Seils 9 geschoben, der Seilkeil 7.3 eingesetzt und der Seilkeil 7.3 mit Hilfe des Verschraubteils 7.2, das auf den Anschlag 7.1 geschraubt wird, mit dem Seil 9 verklemmt. Dadurch wird ein rutschfester Anschlag am Ende des Seils 9 gebildet, welcher auch hohen Zugkräften standhält. Mit den Seilenden der Seile 10 bis 12 wird ebenso verfahren. In einem weiteren Schritt werden die zweiten Enden der Seile 9 bis 12 mit Hilfe der vorteilhafter Weise bereits werkseitig befestigten Seilkauschen 18 an den dafür vorgesehenen Stellen, beispielsweise an den Ecken des Möbelbauteils 27, befestigt. In den Figuren 1b bis 1f sind fünf verschiedene Ausführungsbeispiele zum Befestigen der Seilkausche gezeigt. Schließlich werden die Seile 9 bis 12 mit Hilfe der Spannschrauben so stark gespannt, bis die gewünschte Vorspannkraft erreicht ist bzw. bis das Möbelbauteil 27 die gewünschte Planheit aufweist. Die Spannschrauben, von denen in Figur 3 die beiden Spannschrauben 13 und 14 gezeigt sind, können als Madenschrauben ausgebildet sein, die mit einem Inbusschlüssel in den Spannblock 2 gedreht werden können.

Die soeben beschriebenen Arbeitsschritte können auch vertauscht werden ohne dadurch den Umfang der Erfindung zu verlassen.

In Figur 4 ist die Spannvorrichtung in der Draufsicht gezeigt, wobei die Seile 9 bis 12 der Übersichtlichkeit halber nicht gezeigt sind. Die Spannschrauben sind bei der Darstellung in Figur 4 noch nicht in den Spannblock 2 eingedreht. Dafür sind in Figur 4 die vier Gewindebohrungen 2.1, 2.2, 2.3 und 2.4 zu erkennen, in die später die Spannschrauben eindrehbar sind.

Je nach Bauform des zu spannenden Möbelbauteils 27 und abhängig von den technischen Anforderungen kann es auch genügen, statt der vier Spannseile 9 bis 12 lediglich zwei oder drei Spannseile zu verwenden. Falls fünf oder mehr Spannseile erforderlich sein sollten, ist der Spannblock 2 an die entsprechende Anzahl Seile anzupassen.

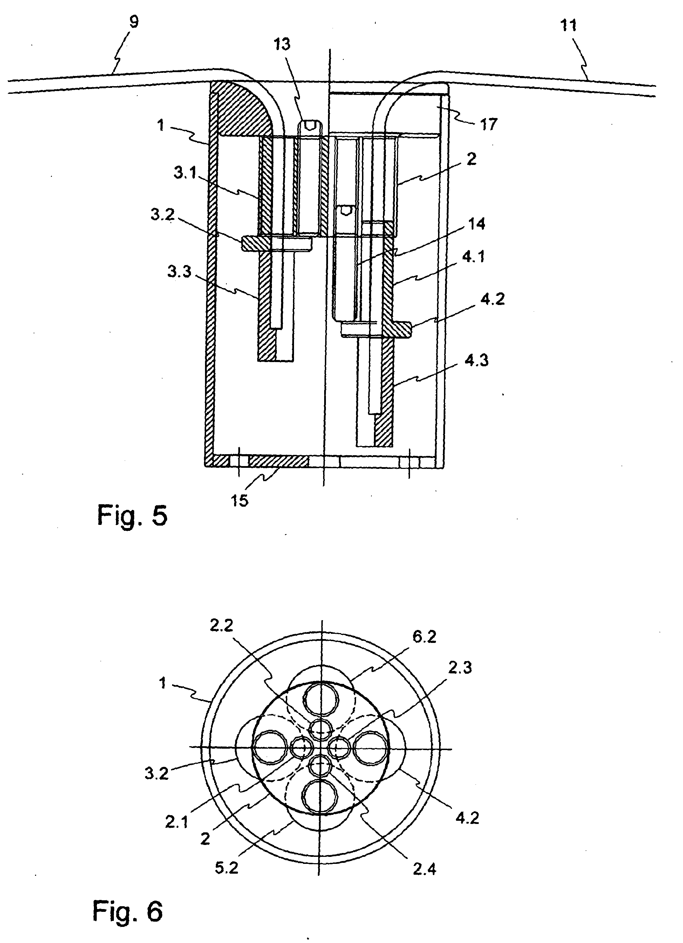

In Figur 5 ist eine zweite Ausführungsform der erfindungsgemäßen Spannvorrichtung im Querschnitt gezeigt. Die zweite Ausführungsform unterscheidet sich von der ersten Ausführungsform lediglich dadurch, dass der Anschlag am Ende der Seile 9 bis 12 anders ausgebildet ist. Bei der in Figur 5 gezeigten zweiten Ausführungsform wird der Anschlag am Seilende durch eine Seilklemmung 3.3 bzw. 4.3 gebildet, welche aus einer Hülse besteht, die auf das Ende des jeweiligen Seils aufgepresst wird. In Figur 5 bildet die Führungshülse 3.1 zusammen mit der Lagerscheibe 3.2 ein erstes Bauteil und die Seilklemmung 3.3 ein zweites Bauteil. Stattdessen können die beiden Bauteile aber auch als ein einstückiges Bauteil hergestellt werden.

In Figur 6 ist die in Figur 5 gezeigte Spannvorrichtung in der Draufsicht gezeigt, wobei der Übersichtlichkeit halber die Spannseile 9 bis 12 und die Spannschrauben nicht dargestellt sind.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung wie beansprucht zu verlassen.

### Bezugszeichenliste

- 1: Hülse
- 2: Spannblock
- 2.1: Innengewinde
- 2.2: Innengewinde
- 2.3: Innengewinde
- 2.4: Innengewinde
- 3.1: erste Führungshülse
- 3.2: Lagerscheibe
- 3.3: Seilklemmung
- 4.1: zweite Führungshülse
- 4.2: Lagerscheibe
- 4.3: Seilklemmung
- 5.1: dritte Führungshülse
- 5.2: Lagerscheibe
- 6.1: vierte Führungshülse
- 6.2: Lagerscheibe
- 7.1: Anschlag
- 7.2: Verschraubteil
- 7.3: Seilkeil
- 8.1: Anschlag
- 8.2: Verschraubteil
- 8.3: Seilkeil
- 9: erstes Seil
- 10: zweites Seil
- 11: drittes Seil
- 12: viertes Seil
- 13: erste Spannschraube
- 14: zweite Spannschraube
- 15: Zentrierscheibe
- 16: Schraube
- 17: Deckel
- 18: Seilkausche
- 19: Seilverbinder
- 20: Eindrehmuffe
- 21: Schraube
- 22: Holzplatte
- 23: Metallwinkel
- 24: Befestigungsscheibe
- 25: Gratleiste
- 26: Blechplatte
- 27: Möbelbauteil

## Patentansprüche

1. Vorrichtung mit mehreren Seilen zum Vorspannen eines Möbelbauteils,
- mit an den ersten Enden der Seile (9 - 12) angeordneten Befestigungsmitteln, mit denen die Seile (9 12) mit dem Möbelbauteil (27) verbindbar sind,
- mit einer Hülse (1), in die die zweiten Enden der Seile (9 - 12) einführbar sind, und
- mit einem in der Hülse (1) angeordneten Spannblock (2), mit dem die zweiten Enden der Seile (9 - 12) verbindbar sind, und mittels welchem die Seile (9-12) spannbar sind.

2. Vorrichtung nach Patentanspruch 1,
bei der die Hülse (1) einen trichterförmigen Seileinlass aufweist.

3. Vorrichtung nach Patentanspruch 2,
bei der der trichterförmige Seileinlass abgerundet ist.

4. Vorrichtung nach Patentanspruch 2 oder 3,
bei der der trichterförmige Seileinlass in die Hülse (1) eingepresst ist.

5. Vorrichtung nach einem der Patentansprüche 1 bis 4,
bei der der Spannblock (2) für jedes Seil (9 - 12) jeweils eine Spannschraube (13, 14) aufweist, mittels der das jeweilige Seil (9 - 12) spannbar ist.

6. Vorrichtung nach einem der Patentansprüche 1 bis 5,
bei der der Spannblock (2) für jedes seil (9 - 12) eine Bohrung aufweist, in der jeweils eine Führungshülse (3.1, 4.1) zum Führen des jeweiligen Seils beweglich gelagert ist.

7. Vorrichtung nach Patentanspruch 6,
bei der die Führungshülse (3.1) als Anschlag eine Lagerscheibe (3.2) aufweist.

8. Vorrichtung nach einem der Patentansprüche 1 bis 7,
bei der die Hülse (1) am Möbelbauteil (27) abstützbar ist.

9. Vorrichtung nach einem der Patentansprüche 1 bis 8,
bei der eine auf einem Möbelbauteil (27) befestigbare Zentrierscheibe (15) vorgesehen ist, um die Hülse (1) gegenüber dem Möbelbauteil (27) zu positionieren.

10. Vorrichtung nach einem der Patentansprüche 1 bis 9,
bei der die Befestigungsmittel (18) als Seilkauschen ausgebildet sind.

11. Vorrichtung nach einem der Patentansprüche 1 bis 10,
bei der statt der Seile (9 - 12) Drähte, Kabel, Bänder oder Riemen verwendet werden.

12. Verwendung der Vorrichtung nach einem der Patentansprüche 1 bis 11
zum Vorspannen eines Möbelbauteils (27), welches vorzugsweise eine Tischplatte, eine Glasplatte, eine Anrichte oder ein Fachboden ist.

## Claims

1. Device with several cables for pretensioning a furniture element,
- with fastening means attached to the first end of the cables (9 - 12), with which the cables (9 - 12) can be connected with the furniture element (27),
- with a sleeve (1) into which the second ends of the cables (9 - 12) can be led, and
- with a clamping block (2) located in the sleeve (1), with which the second ends of the cables (9 - 12) can be connected and with which the cables (9 - 12) can be tensioned.

2. Device according to claim 1,
wherein the sleeve (1) has a funnel-shaped cable inlet.

3. Device according to claim 2,
wherein the funnel-shaped cable inlet is rounded off.

4. Device according to claim 2 or 3,
wherein the funnel-shaped cable inlet is pressed into the sleeve (1).

5. Device according to one of the claims 1 to 4,
wherein the clamping block (2) comprises for each cable (9 - 12) a clamping bolt (13, 14) with which the respective cable (9-12) can be tensioned.

6. Device according to one of the claims 1 to 5,
wherein the clamping block (2) comprises for each cable (9 - 12) a hole into which there is respectively a guide sleeve (3.1, 4.1) movably mounted to guide the respective cable.

7. Device according to claim 6,
wherein the guide sleeve (3.1) comprises a bearing plate (3.2) which acts as a limit stop.

8. Device according to one of the claims 1 to 7,
wherein the sleeve (1) can be supported on the furniture element (27).

9. Device according to one of the claims 1 to 8,
wherein a centring disc (15) is provided attached to a furniture element (27) in order to position the sleeve (1) relative to the furniture element (27).

10. Device according to one of the claims 1 to 9,
wherein the fastening device is designed as a grommet thimble (18).

11. Device according to one of the claims 1 to 10,
wherein wires, ropes, belts or straps are used instead of the cables (9 - 12).

12. Use of the device according to one of the claims 1 to 11,
for pretensioning a furniture element (27) which is preferably a table top, a glass top, a dresser or a lower shelf.

## Revendications

1. Dispositif avec plusieurs câbles destiné à préserrage un élément de meuble,
- avec des moyens de fixation agencés au niveau des premières extrémités des câbles (9 - 12), avec lesquels les câbles (9 - 12) peuvent être reliés à l'élément de meuble (27),
- avec une douille (1), dans laquelle les secondes extrémités des câbles (9 - 12) peuvent être introduites, et
- avec un bloc de serrage (2) agencé dans la douille (1), avec lequel les secondes extrémités des câbles (9 - 12) peuvent être reliées, et à l'aide duquel les câbles (9 - 12) sont susceptibles d'être serrés.

2. Dispositif selon la revendication 1,
où la douille (1) présente une entrée pour câble en forme d'entonnoir.

3. Dispositif selon la revendication 2,
où l'entrée pour câble en forme d'entonnoir est arrondie.

4. Dispositif selon la revendication 2 ou 3,
où l'entrée pour câble en forme d'entonnoir est pressée dans la douille (1).

5. Dispositif selon une des revendications de 1 à 4,
où le bloc de serrage (2) pour chaque câble (9 - 12) présente à chaque fois une vis de serrage (13, 14), à l'aide de laquelle le câble respectif (9 - 12) est susceptible d'être serré.

6. Dispositif selon une des revendications de 1 à 5,
où le bloc de serrage (2) pour chaque câble (9 - 12) présente un perçage, dans lequel à chaque fois une douille de guidage (3.1, 4.1), destinée au guidage du câble respectif, est logée de façon mobile.

7. Dispositif selon la revendication 6,
où la douille de guidage (3.1) présente un disque de butée de palier (3.2) en tant que dispositif de blocage.

8. Dispositif selon une des revendications de 1 à 7,
où la douille (1) est susceptible de s'appuyer à l'élément de meuble (27).

9. Dispositif selon une des revendications de 1 bis 8,
où une rondelle de centrage (15) pouvant être fixée à un élément de meuble (27) est prévue afin de positionner la douille (1) vis-à-vis de l'élément de meuble (27).

10. Dispositif selon une des revendications de 1 bis 9,
où les moyens de fixation sont formés en tant que cosses de câble (18).

11. Dispositif selon une des revendications de 1 bis 10,
où l'on peut utiliser des fils métalliques, cordages, bandes ou des courroies au lieu et à la place des câbles (9-12).

12. Utilisation du dispositif selon une des revendications de 1 à 11,
destiné à préserrage un élément de meuble (27), lequel est, de préférence, un dessus de table, une plaque de verre, une commode ou une étagère inférieure.
